## Europäisches Patentamt

## European Patent Office

## Office européen des brevets

(19)

(11) Veröffentlichungsnummer: **0 267 325**
**A1**

(12) ## EUROPÄISCHE PATENTANMELDUNG

(21) Anmeldenummer: **86116225.3**

(22) Anmeldetag: **22.11.86**

(51) Int. Cl.4: **A23P 1/16** , A23L 1/212 ,
A23L 1/064 , A23G 9/02

(30) Priorität: **12.11.86 DE 3638662**

(43) Veröffentlichungstag der Anmeldung:
**18.05.88 Patentblatt 88/20**

(84) Benannte Vertragsstaaten:
**AT BE CH DE ES FR GB GR IT LI LU NL SE**

(71) Anmelder: **International Flavors & Fragrances IFF (Deutschland) Gesellschaft mit beschränkter Haftung**
**Reeser Strasse 60**
**D-4240 Emmerich(DE)**

(72) Erfinder: **Albersmann, Heinz**
**Dechant-Sprünken-Strasse 17**
**D-4240 Emmerich(DE)**

(54) **Verfahren zu Herstellung von Obst-, Gemüse- oder Gewürzschaumspeisen.**

(57) Solche Schaumspeisen, wie Obst-Joghurt, Speiseeis, Cremes oder dgl., die als Desserts, Garnierung oder zum Direktverzehr verwendet werden, enthalten außer den Früchten meist Fette, Eiweiß und Zucker, um eine verhältnismäßig stabile Struktur zu erhalten, sie sind daher sehr nahrhaft und auch schwer verdaulich.

Zur Erzeugung kalorienreduzierter Frucht-Schaumspeisen ohne Fette und Eiweiß, die neben den oben angeführten Verwendungen als geschmacksverbessernde, volumenvergrößernde sowie dekorative Ober-oder Zwischenschichten benutzt werden oder auch zum Zwischendurchverzehr in erzeugter Art in Betracht kommen, werden neben den verwandten Fruchtgrundstoffen Zucker bzw. Zuckeraustauschstoffe oder Süßstoffe, Gewürze bzw. Fruchtauszüge oder dergleichen in entsprechenden Mengen Hydrokolloid -Kombinationen und zur Erzielung einer hohen stabilen Aufschäumung geeignete Emulgatoren zugesetzt.

EP 0 267 325 A1

## Verfahren zur Herstellung von Obst-, Gemüse-oder Gewürz-Schaumspeisen

Die Erfindung betrifft ein Verfahren zur Herstellung von Obst-, Gemüse-oder Gewürz-Schaumspeisen zur Veredelung bzw. Garnierung oder Füllung verzehrfertiger Lebensmittel, wie Nachspeisen, Speiseeis, Joghurt, Backwaren und dergleichen, sowie zum Verzehr in erzeugter Art.

Durch das Aufschäumen solcher Speisen mit Luft oder Gasen wird ein angenehmes Verzehren durch eine lockere, schaumige Konsistenz erreicht, wobei auch die Fruchtaromen sich in den Luftbläschen anreichern und dadurch organoleptisch stärker zur Wirkung kommen, das Volumen wird in Grenzen definiert vergrößert und im Verhältnis hierzu der Nährwert herabgesetzt, so daß auch ein kalorienreduzierter Effekt erreicht ist.

Durch die DE-OS 2 147 033 sind Garnierungen, Aufstriche und gefrorene Desserts mit geringem Kaloriengehalt als Imitationen von ölartigen, fetthaltigen Aufstrichen, wie Butter, Margarine, Käse oder Dips, gefrorene Desserts, einschließlich Eiskrem und Sorbet sowie auch Puddings, Glasuren, Saucen und dgl. sowie auch Rasierkrems bekannt geworden. Die imitierten Nahrungsmittel dieser Art sollen keine Speisen mit Ernährungswert sein, sondern sie sollen lediglich das Eßvergnügen in unbegrenzten Mengen befriedigen, wenn dies erwünscht oder diätetisch erforderlich ist. Sie stellen nach dem Anspruch 1 wäßrige Schäume dar der Zusammensetzung bis zu 55 Gewichtsprozenten nichtwäßriger Bestandteile, wie Fructose, max. 5 % Fett, 0.33 bis 7,5 Gewichtsprozenten eines besonderen Polyglycerinfettesters, 0,2 bis 3 Gewichtsprozenten hydrophilen Kolloids.

Die Unteransprüche 2 bis 27 in Verbindung mit den Beispielen A bis R beziehen sich auf spezielle Rezepturen, deren Endprodukte in ein-oder zweistufigen Herstellungsverfahren stets als hervorragendes, erfinderisches Merkmal ölige Imitationen darstellen. Die Rezepturen sind als Lieferungen zur Herstellung der ölartigen Imitationen von Lebensmitteln in den Haushalten bzw. Diätküchen vorgesehen, sie müssen unter hohen, in engen Toleranzgrenzen einzuhaltenden Temperaturen in einer und auch in zwei Stufen verarbeitet werden. Es zeigte sich, daß bei der Verwendung von Polyglycerinfettester keine Strukturstabilität von längerer Zeitdauer zu erreichen ist, vielmehr tritt eine negative Beeinflussung in dieser Beziehung ein, die zu einem Saponifizieren des Emulgators führt, was den völligen Verlust der Schäumeigenschaft zur Folge hat und das Produkt zudem stark negativ organoleptisch beeinflußt. Demnach geben diese Vorschläge zur Herstellung von Fruchtzubereitung, insbesondere auf dem industriellen Sektor, von Schaumspeisen in Bezug auf die erfinderische Aufgabe keine Hinweise.

Gemäß einem Vorschlag zur Herstellung von eßbarem Dessertgel, US-PS 3.556.810, wird zur Erhöhung der Festigkeit und der Konsistenz sowie zum Verhindern einer Synerese ein geeignetes Geliermittel vorgeschlagen, das jedoch zur Lösung der hierzu gattungsfremden erfindungsgemäßen Aufgabe zur Herstellung von Obst-Schaumspeisen keine Anregung gibt.

Das Aufschäumen von Speisen wird auch bereits zum Erreichen der angeführten Eigenschaften oder eines Teiles derselben vielfach bei Schlagsahne, Eiweiß-Zucker-Schaumspeisen, die oft mit Baiser bezeichnet werden, Speiseeis, Puddings und ähnlich zusammenge setzten Mischspeisen angewandt, wobei teils natürliche oder naturidentische Fruchtaromastoffe zugesetzt werden.

Es ist aber bislang zur Erzielung der gewünschten Geschmacksqualität, Aufschäumungsgröße und einer Strukturstabilität hierbei erforderlich, hohe prozentuale Bestandteile an Eiweiß, Zucker und Fetten - es sei nur an Schlagsahne und die sogenannten Negerküsse erinnert-oder zum Teil zwei dieser Bestandteile einzusetzen. Hiedurch handelt es sich bei diesen Süßspeisen bzw. sogenannten Desserts zum zusätzlichen oder Zwischendurchverzehr um sehr nahrhafte Speisen, die oft als abschließende Krönung größerer Menüs gereicht werden. Der Kalorienreichtum dieser Speisen ist aber oft unerwünscht; er muß derzeit mangels Bekanntsein nährstoffärmerer Nachspeisen mit den erwähnten Eigenschaften, falls solche Vor-oder Nachspeisen in Betracht gezogen werden, zur Steigerung und Abrundung des lukullischen Genusses in Kauf genommen werden.

Weiter ist hierbei nachteilig, daß derartige Speisen durch ihre Inhaltsstoffe Fett-Zucker-Eiweiß bzw. Fett-Zucker schwer verdaulich sind, da sie im Stoffwechsel oft Gärungen verursachen.

Auch werden in steigendem Maße Milchprodukte, wie Quark, Joghurt oder dergleichen,aufgeschäumt, in Bechern zum Verkauf angeboten, und zur Geschmacksverbesserung sowie zur Steigerung der Vielfalt werden ihnen oft Obstprodukte, wie Fruchtgrundstoffe zugegeben. Diesen Obstprodukten fehlen aber die besonderen Vorteile der Aufschäumung, insbesondere der Volumenvergrößerung, es muß deshalb,damit diese Fruchtbestandteile die erwünschte Beachtung finden, verhältnismäßig viel von ihnen beigegeben werden, was verteuernd ist.

Schließlich werden auch solche aufgeschäumten Milchprodukte mit entsprechenden Obstanteilen zu homogenen Gemischen hergestellt und ebenfalls in Bechern zum Verkauf angeboten, wobei aber die gleichen erwähnten Nachteile vorliegen.

Der Erfindung liegt die Aufgabe zugrunde, ein Verfahren zur Herstellung von aufgeschäumten, strukturstabilen und temperaturunempfindlichen sowie preisgünstigen Fruchtspeisen auf Obst-, Gemüse-oder Gewürzbasis, also unter Verwendung von Früchten aus Obst bzw. von entsprechenden bekannten Fruchtgrundstoffen oder Fruchtauszügen resp. Fruchtkonzentraten, aber auch gängigen Gemüsezusätzen, wie Paprika, Meerrettich, Senf, geriebenen Salatgurken und dergleichen, außerdem konventionelle Geschmacksträger, wie z.B. Vanille, Schokolade, Karamel, Mokka oder ähnlichen, vorzuschlagen, die keine nennenswerten Eiweiß-und Fettbestandteile enthalten und auch für den diabetischen Bereich ohne Zucker, dafür mit Zuckeraustauschstoffen, hergestellt werden, ohne daß hierbei die vorstehend erwähnten Nachteile und Einschränkungen der bisher bekannten Speisen vorliegen. Hierbei ist es erforderlich, daß der zur Aufschäumung verwendete Fruchtgrundstoff als fertiger Einkomponentenstoff zur Verfügung gestellt wird, der unabhängig von der Lagerzeit in diesem auslieferungsfähigen Zustand keinen Qualitätsverlust für die Schaumspeisenherstellung erleidet.

Die Schaumspeisen gemäß der Erfindung sollen also kalorienreduziert, gut verdaulich, angenehm zu verzehren und preiswert herzustellen sein, die gewünschte Volumenvergrößerung von etwa 70 bis 150 % und mehr ermöglichen sowie auf lange Zeit so strukturstabil und temperaturbe ständig sein, daß sie zum Kombinieren, Veredeln, Garnieren anderer Speisen bzw. zum Einbringen in diese, wie z.B. in Süßspeisen, Desserts, Milchprodukte, auch in Bezug auf die Bebrütung derselben, Backwaren oder auch als Einzelspeisen Verwendung finden können. Diese neuen Schaumspeisen sollen ferner auch in besonderer Weise geeignet sein, in Behälter, wie Becher, Flaschen,Pokale vorzugsweise schichtweise mit anderen Speisen oder allein, sowie in Spenderbeutel zum bekannten Verzieren eingebracht zu werden.

Die heutigen Strukturen des Verkaufs von fertigen Speiseprodukten verlangen diese Eigenschaften, damit eine hohe Transport-, Wärme-und Gefrierstabilität sowie eine lange Lagerfähigkeit garantiert ist und eine ansprechende Präsentation und werbewirksame Aufmachung vorliegt. Deshalb müssen solche Schaumspeisen in der wäßrigen Phase weitgehend immobilisiert sein, um Auflösungserscheinungen zu den anderen Komponenten der zusammengesetzten Fertigspeisen auszuschließen, wodurch auch eine definierte Wichte erreichbar sein muß, damit sie je nach Wunsch auf oder in anderen Speisen, wie Joghurt oder sonstigen Cremes, beim Einbringen in vorzugsweise durchsichtige Becher schwimmen bzw. als deutlich hervortretende Zwischenschichten fixiert bleiben und nicht absacken oder unerwünscht hochsteigen.

Diese Aufgabe wird durch ein Verfahren dadurch gelöst, daß zur Erreichung einer Aufschäumung von 70 bis 150 % und mehr, bezogen auf den Grundstoff von etwa 10 bis 70 % Trockenmasse, bei einer Aufschlagtemperatur von 7 bis 9 °C, Fruchtgrundstoffe bzw. Fruchtanteile folgender Rezeptur verwendet werden:

entweder bei Süßschaumspeisen auf Zuckerbasis, Frucht etwa 30 bis 70 %, Zucker etwa 20 bis 60 %,

oder bei Süßschaumspeisen auf Zuckeraustauschbasis, Frucht etwa 30 bis 70 %, Fructose etwa 10 bis 20 %, künstliche Süßstoffe nach Geschmack,

oder bei Süßschaumspeisen auf Zuckeraustauschbasis, Frucht etwa 30 bis 70 %, künstliche Süßstoffe nach Geschmack,

oder bei pikanten Gemüseschaumspeisen, Frucht 30 bis 50 %, Salz und/oder Zucker in geringen Mengen nach Geschmack,

oder bei Schaumspeisen auf Fruchtkonzentratbasis, Mengen der Fruchtauszüge nach Inhalt und Geschmack,

hierin sind bei der Herstellung des aufschäumenden Fruchtgrundstoffes einzumischen:

a) Hydrokolloid-Kombination 0,5 bis 0,8 Gewichtsprozenten, bezogen auf den Grundstoff, folgender Zusammensetzung:

25 % Johannisbrotkernmehl
25 % Pektin, Veresterungsgrad etwa 35 - 38 %,
50 % Carraghenane,

b) Emulgator in einer Menge von etwa 0,03 - 0,08 Gewichtsprozente bezogen auf den Grundstoff, dem er bei seiner aufschlagsfähigen Herstellung zugeführt wird und hierbei sowie bei längerer Lagerung seine emulgierenden Eigenschaften nicht verliert, also nicht saponifiziert, als Kombination folgender Zusammensetzung:

entweder destilliertes Monoglycerid und Stearoyl -2-Lactylaten oder destillieres Monoglycerid und diacetyliertem Weinsäureester aus Monoglycerid oder diacetyliertem Weinsäureester aus Monoglycerid und Natrium Stearat. Rest Wasser

Weitere Merkmale der Erfindung sind durch die Patentansprüche gekennzeichnet, so z.B., daß dann, wenn nur eine Aufschäumung von 50 bis 70 %, bezogen auf den Grundstoff, erreicht werden soll und auf eine hochfeinporige Ausführung der erzeugten Schaumspeise verzichtet wird, ist kein Emulgator zu verwenden.

Entsprechend dem Können des einschlägigen Fachmanns liegt es im Rahmen der erfinderischen Offenbarung, bei den Zusätzen auch identische Stoffe auszuwählen, ebenfalls auch zur Erreichung der geforderten bzw. gewünschten mechanischen Eigenschaften der Fruchtschaumspeisen, die Komponenten der Schäummaschine in Bezug auf die Drücke, die minütliche Drehzahlhöhe des Mischkopfes und die Luftzufuhr entsprechend einzustellen.

Zur Erzielung einer besonders hohen Steifheit der Schaumspeise, so daß vom Vorliegen einer Schnittfestigkeit gesprochen werden kann, wird in Vorschlag gebracht, den Anteil der Hydrokolloide auf etwa 0,6 bis 1,0 und den des Emulgators auf etwa 0,08 bis 0,1 Gewichtsprozente, je nach Fruchtart oder dergleichen, zu erhöhen.

Das beschriebene Verfahren der Aufschäumung der angegebenen Rezepturen erlaubt eine Vielzahl neuer, beliebiger Kombinationen mit anderen cremigen, festen oder gefrorenen Lebensmittelzubereitungen, wobei es zu keiner Vermischung oder Auflösung kommt. Die klare Trennung der Komponenten bleibt beständig erhalten. Das aufgeschäumte Produkt kann beständig auf Wasser schwimmen bzw. in ihm eingetaucht sein.

Besonders vorteilhaft ist es, daß mit dem erfinderischen Verfahren auch die Aufschäumung von Produkten zur weiteren küchenmäßigen Verwendung vorbereiteter Lebensmittel pflanzlicher Herkunft, wie cremige, schaumstabilisierte Zubereitungen mit Meerrettich, Senf, Tomaten bzw. anderen Gemüsen sowie Gewürzen mit Stabilisatoren ohne oder mit Verwendung von wenig Zucker, aber mit Salz ung gegebenenfalls Essig oder anderen Genußsäuren, durchgeführt werden kann.

Das erfinderische Verfahren ist auch zur Herstellung von diätischen Erzeugnissen, z.B. für Diabetiker anwendbar, wenn der Zucker durch Fructose oder Zuckeraustauschstoffe, z.B. Sorbit, Xylit usw. , erforderlicherweise in Kombination mit künstlichen Süßstoffen, ersetzt wird.

Die besonderen Vorteile der Erfindung bestehen insbesondere darin, daß der zur Aufschäumung in Betracht kommende Fruchtgrundstoff die gesamten Bestandteile der Rezeptur enthalten kann und hierbei beliebig lang lagerfähig ist. Dies ist für eine einfache und risikoarme Herstellung der Schaumspeisen, insbesondere durch den hierfür erfindungsgemäß ermittelten geeigneten Emulgator sehr günstig. Es hat sich nämlich gezeigt, daß die zur Aufschäumung vorbereiteten Grundstoffe, bei denen andere, bekannte Emulgatoren verwendet wurden, zwar im frischen Zustand aufschäumbar sind, wobei aber nach verhältnismäßig kurzer Lagerzeit der Emulgator in dem Medium hydrolisiert und hierdurch organoleptisch dem Produkt einen seifigen Charakter gibt. Nach kürzester Lagerzeit ist zudem der Grundstoff, dem die nicht geeigneten Emulgatoren zugesetzt sind, nicht mehr aufschäumbar, da diese saponifizierten Emulgatoren die sonst aufschäumbaren Eigenschaften der verwendeten Hydrokolloide negativ beeinflussen.

Vorteilhaft ist ebenfalls, daß die aufgeschäumten Obst-, Gemüse-bzw. Gewürzschaumzubereitungen, als eine Art Emulsion, entweder aus gezuckerten Speisen, also ohne bzw. ohne nennenswerte Fett-und Eiweißanteile bestehen, daher bei hohem Süßgenuß und Geschmacksniveau kalorienarm und gut verdaulich sind oder daß pikante Gemüse-bzw. Gewürzschaumspeisen auch ohne oder nur mit wenig Fett-und Eiweißanteilen zur Verfügung stehen. Bisher nicht bekannt, aber besonders vorteilhaft ist es, daß die erfinderischen Schaumspeisen bei einer hohen Aufschäumung von etwa 70 - 150 %, auch in besonderen Fällen bis etwa 200 %, hierbei eine verhältnismäßig hohe stabile Konsistenz aufweisen bei einer guten Temperaturbeständigkeit in Anwendungsbereichen zwischen etwa minus 30 bis plus 45° C, wobei durch das große Volumen im Verhältnis zur Masse der Eindruck eines besonders günstigen Angebotes vermittelt wird, was dadurch bestärkt wird, daß diese strukturstabilen Schaumspeisen sowohl vorzugsweise in durchsichtigen Behältern als auch zur Garnierung oder Füllung anderer Speisen in Betracht kommen als auch gleichermaßen zum direkten Verzehr vorteilhaft geeignet sind.

Ein der Art der erfindungsgemäßen Schaumspeise eigener hervorzuhebender zusätzlicher Vorzug zeigt sich auch beim Verzehr dieser Speisen, wenn sie sich im gefrorenen oder auch tiefgefrorenen Zustand befinden, weil hierbei ein besonders angenehmes Abschmelzen ohne das Bemerken von Eiskristallen, also ein nichtgrießiger Zustand, empfunden wird, da sich beim erfinderischen Verfahren eben keine nennenswerten Eiskristalle bilden.

Es hat sich gezeigt, daß bei der Aufschäumung von etwa 95 bis 105 % der Geschmack und das angenehme Empfinden beim Verzehr am günstigsten ist, wobei höhere Aufschäumungen, z.B. 150 bis etwa 200 %, dann in Betracht kommen, wenn dies für spezielle Bedarfsfälle, z.B. bei Festlichkeiten besonderer Art, wie Kinderfesten, Kirmesveranstaltungen und dergleichen, erwünscht ist.

Unter Zuhilfenahme nachstehender Formel kann das Aufschlagvolumen in Prozenten auch durch eine Rechnung in Annäherung vorbestimmt werden und zwar:

4

$$\text{Prozentueller Aufschlag} = \frac{G_1 - G_2}{G_2} \times 100,$$

wobei:

$G_1$ = Gewicht des Fruchtgrundstoffes einer Volumeneinheit ($V_E$),

$G_2$ = Gewicht des aufgeschlagenen Fruchtgrundstoffes in der Volumeneinheit($V_E$) ist.

Beim gleichmäßigen Aufschäumen werden feinste Luftbläschen in die Schaumspeise eingearbeitet, wobei durch die Trockensubstanz z.B. bei Verwendung von Zucker die gewünschten $a_W$-Werte eingestellt werden können.

In Verbindung mit der immobilisierenden wäßrigen Phase durch Anwendung natürlicher Stabilisatoren (Hydrokolloide) garantiert dies die Stabilität der Schäume. Die einwandfreie bakteriologische Beschaffenheit wird durch ausreichend hohe Temperaturen bei der Herstellung der aufzuschäumenden Grundstoffe gewährleistet.

Die folgenden Beispiele erläutern die Erfindung.

Beispiel 1

Zur Aufschäumung einer zuckergesüßten Obstschaumspeise werden die Reguliermöglichkeiten der Schäum maschine in Bezug auf die Zuführung des stabilisierten, pasteurisierten Fruchtgrundstoffsystems, der Gaszufuhr, des Druckes und des Gegendruckes derselben sowie der Drehzahl des Mischkopfes so eingestellt,daß eine etwa 100 %ige Aufschäumung, bezogen auf die Ausgangsmenge des Grundstoffes,erreicht wird, bei einer Temperatur der Bestandteile von etwa 7 bis 9 °C und folgender Rezeptur des Fruchtgrundstoffes:

etwa 30 % Frucht,

etwa 45 - 50 % Zucker,

Hydrokolloide etwa 0,5 bis 0,9 Gewichtsprozente folgender Zusammensetzung:

25 % Johannisbrotkernmehl,

25 % Pektin, Veresterungsgrad etwa 35 bis 38 %,

50 % Carraghenane,

Emulgator 0,03 bis 0,08 Gewichtsprozente,

Rest Wasser.

Beispiel 2

Ausreichende Rezeptur für etwa eine Aufschäumung von 70 % einer zuckergesüßten Obstschaumspeise:

etwa 30 % Frucht,

etwa 45 - 50 % Zucker,

Hydrokolloide wie bei Beispiel 1,

Rest Wasser.

Beispiel 3

Herstellung einer kalorienreduzierten Schaumspeise, zuckergesüßt bei etwa 100 %iger Aufschäumung mit folgender Rezeptur :

etwa 30 % Frucht,

etwa 20 bis 25 % Zucker,

Hydrokolloide etwa 0,5 bis 0,9 Gewichtsprozente folgender Zusammensetzung:

25 % Johannisbrotkernmehl,

25 % Pektin, Veresterungsgrad etwa 35 bis 38 %,
50 % Carraghenane,
Emulgator 0,03bis 0,o8Gewichtsprozente,
Rest Wasser.

Beispiel 4

Herstellung einer diätetischen Anwendungsrezeptur für eine Aufschäumung von etwa 100 %:
etwa 30 % Frucht,
etwa 10 bis 20 % Fructose,
künstliche Süßstoffe nach Geschmack,
0,7 bis 1,0 % Hydrokolloide folgender Zusammensetzung, etwa:
25 % Johannisbrotkernmehl,
25 % Pektin,
50 % Carraghenane,
etwa 0,03 bis 0,08 % Emulgator,
Rest Wasser.

Beispiel 5

Herstellung einer Schaumspeise in Gemüsegeschmacksrichtung nach folgender Rezeptur, bei einer Aufschäumung von etwa 100 %:
etwa 30 bis 50 % Frucht (Gemüse)
Salz und/oder Zucker nach Geschmack,
0,7 bis 1,0 Gewichtsprozente Hydrokolloide in der Zusammensetzung wie bei Beispiel 1,
Emulgator wie bei Beispiel 1,
Rest Wasser.

Beispiel 6

Herstellung einer Schaumspeise unter Verwendung von Fruchtauszügen ,wie Vanille, Schokolade, Mokka und dgl., bei einer etwa 100 %igen Aufschäumung unter der Rezeptur :
Fruchtauszüge in der Menge nach Geschmack und Inhalt,
etwa 20 bis 50 % Zucker,
Hydrokolloide etwa o,5 bis 1,0 Gewichtsprozente in der Zusammensetzung wie beim Beispiel 1,
Emulgator 0,03bis o,o8Gewichtsprozente,
Rest Wasser.
Alle ohne Hinweis angegebenen Gewichtsprozente beziehen sich auf den Grundstoff der Trockenmasse.

**Ansprüche**

1. Verfahren zur Herstellung von Obst-, Gemüse-oder Gewürz-Schaumspeisen zur Kombination, Veredelung, Garnierung oder Füllung verzehrfertiger Lebensmittel, wie Nachspeisen, Speiseeis, Joghurt, Backwaren und dergleichen, sowie zum Verzehr in erzeugter Art, dadurch gekennzeichnet, daß zur Erreichung einer Aufschäumung von 70 bis 150 % und mehr, bezogen auf den Grundstoff von etwa 10 bis 70 % Trokkenmasse, bei einer Aufschlagtemperatur von etwa 7 bis 9 °C ein Fruchtgrundstoff bzw. daß Fruchtanteile folgender Rezeptur verwendet werden:
entweder bei Süßschaumspeisen auf Zuckerbasis, Frucht etwa 30 bis 70 %, Zucker etwa 20 bis 60 %,
oder bei Süßschaumspeisen auf Zuckeraustauschbasis, Frucht etwa 30 bis 70 %, Fructose etwa 10 bis 20 %, künstliche Süßstoffe nach Geschmack,
oder bei Süßschaumspeisen auf Zuckeraustauschbasis, Frucht etwa 30 bis 70 %, künstliche Süßstoffe nach Geschmack,
oder bei pikanten Gemüseschaumspeisen, Frucht 30 bis 50 %, Salz und/oder Zucker in geringen Mengen nach Geschmack,

oder bei Schaumspeisen auf Fruchtkonzentratbasis, Mengen oder Fruchtauszüge nach Inhalt und Geschmack,

hierin sind bei der Herstellung des aufschäumbaren Fruchtgrundstoffes einzumischen:

a) Hydrokolloid-Kobination 0,5 bis o,8 Gewichtsprozente. bezo gen auf den Grundstoff,etwa folgender Zusammensetzung:

25 % Johannisbrotkernmehl,

25 % Pektin, Veresterungsgrad etwa 35 - 38 %,

50 % Carraghenane,

b) Emulgator in einer Menge von etwa 0,03 bis 0,08 Gewichtsprozente, bezogen auf den Grundstoff als Kombination folgender Zusammensetzeung:

entweder destilliertes Monoglycerid und Stearolyl -2-Lactylaten,

oder destilliertem Monoglycerid und diacetyliertem Weinsäureester aus Monoglycerid,

oder diacetyliertem Weinsäureester aus Monoglycerid und Natrium Stearat.

Rest Wasser

2. Verfahren nach Anspruch 1, dadurch gekennzeichnet, daß zur Erzielung einer hohen Steifheit der Schaumspeisen der Anteil der Hydrokolloid-Kombination auf etwa 0,8 bis 1,0 Gewichtsprozente, bezogen auf die jeweiligen Grundstoffe, eingestellt wird.

3. Verfahren nach Ansprüchen 1 und 2, dadurch gekennzeichnet, daß kein Emulgator zugesetzt ist.

4. Verfahren nach den Ansprüchen 1 bis 3, dadurch gekennzeichnet, daß unter Zuhilfenahme einer Aufschäummaschine, vorzugsweise mit regelbarer Drehzahl des Mischkopfes sowie einstellbarer kontinuierlicher Zuführung der einzelnen Bestandteile, wie Fruchtgrundstoff mit Zusätzen, Zucker bzw. deren Austauschstoffe oder Gemüse-bzw. Fruchtauszugsbestandteile und Wasser, bei einer Reguliermöglichkeit der Gasmenge und ihres Druckes das Aufschäumen durchgeführt wird.

| Europäisches Patentamt | **EUROPÄISCHER RECHERCHENBERICHT** | Nummer der Anmeldung |
| | | EP 86 11 6225 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A,D | DE-A-2 147 093 (BRISTOL-MYERS CO.)<br>* Bespiel E; Seite 5, Abschnitte 1,3; Seite 8, Abschnitt 3 * | 1,4 | A 23 P 1/16<br>A 23 L 1/04<br>A 23 L 1/064 |
| | --- | | |
| A | US-A-3 556 810 (A.L. MOIRANO et al.)<br>* Anspruch 1; Beispiel 1 * | 1-3 | |
| | --- | | |
| A | DE-A-2 129 853 (J.H. WESELOH)<br>* Anspruch 1; Beispiel * | 1,3 | |
| | ----- | | |

|  |
|---|
| **RECHERCHIERTE SACHGEBIETE (Int. Cl.4)** |
| A 23 P<br>A 23 L<br>A 23 C<br>A 23 G |

Der vorliegende Recherchenbericht wurde für alle Patentansprüche erstellt

| Recherchenort | Abschlußdatum der Recherche | Prüfer |
|---|---|---|
| DEN HAAG | 04-09-1987 | SANTOS Y DIAZ A.I. |